# EUROPEAN PATENT SPECIFICATION

(11) **EP 2 120 385 B1**
(45) Date of publication and mention of the grant of the patent: **04.11.2015**
(21) Application number: 08734062.6
(22) Date of filing: 14.04.2008
(51) Int. Cl.: G06F 21/30, H04L 9/32, H04L 29/06

(54) **METHOD, DEVICE AND SYSTEM FOR TRIGGERING DEVICE TO OPERATE**
VERFAHREN, GERÄT UND SYSTEM ZUM AUSLÖSEN DER BETÄTIGUNG EINES GERÄTS
PROCÉDÉ, DISPOSITIF ET SYSTÈME DE MISE EN UVRE D'UN DISPOSITIF DE DÉCLENCHEMENT

(30) Priority: 16.04.2007 CN 200710097801
(43) Date of publication of application: 18.11.2009
(73) Proprietor: Huawei Technologies Co., Ltd., Longgang District Shenzhen, Guangdong 518129 (CN)
(72) Inventor: ZHANG, Renzhou, Shenzhen Guangdong Province 518129 (CN); ZHOU, Haojuan, Shenzhen Guangdong Province 518129 (CN); ZHOU, Zhipeng, Shenzhen Guangdong Province 518129 (CN); CHEN, Dagang, Shenzhen Guangdong Province 518129 (CN); HUANG, Chen, Shenzhen Guangdong Province 518129 (CN); DANG, Pei, Shenzhen Guangdong Province 518129 (CN); FENG, Wenjie, Shenzhen Guangdong Province 518129 (CN)
(74) Representative: Kreuz, Georg Maria
(86) International application number: PCT/CN2008/070704
(87) International publication number: WO 2008/125056

(56) References cited:
- EP-A2- 1 511 347
- CN-A- 1 851 608
- CN-A- 1 858 769
- CN-A- 1 858 769
- OMA DIGITAL RIGHTS MANAGEMENT: "OMA Digital Rights Management, DRM Specification Version 2.0" DRM SPECIFICATION, XX, XX, 16 July 2004 (2004-07-16), page COMPLETE, XP002335532
- Open Mobile Alliance, OMA: "OMA DRM v2.0 Extensions for Broadcast Support - Draft Version 1.0 - 25 April 2006 - OMA-TS-DRM-XBS-V1_0-20060425-D" 24 April 2005 (2005-04-24), XP002575057 Retrieved from the Internet: URL:http://member.openmobilealliance.org/f tp/Public_documents/DRM/Permanent_document s/OMA-TS-DRM-XBS-V1_0-20060425-D.zip> [retrieved on 2010-03-24]
- Gorry Fairhurst: "Session 1998-99 Exam 1 - EG/ES 3561 Worked Solutions" 1999, XP002575058 Retrieved from the Internet: URL:http://www.erg.abdn.ac.uk/users/gorry/ eg3567/exams/EG3561-99-1-Solution.pdf> [retrieved on 2010-03-24]

## Description

### FIELD OF THE INVENTION

The present disclosure relates to digital rights management, and more specifically, to method, device and system for triggering a device to perform an operation.

### BACKGROUND

Generally, Digital Rights Management (DRM) controls the utilization of the digital content with a rights restriction and content protection scheme so as to protect the legal rights of the content owner. A user may acquire digital contents from a network or other device. Typically, the digital contents are encrypted and may form a content data package together with some other information such as content encryption algorithm. Rights Issuer (RI) is responsible for issuing license corresponding to the content data. The license may contain a content decipher key and associated rights. The device can access the digital content only when provided with both the content data and the license. A DRM device may acquire a content decipher key based on the license such that the digital content may be deciphered. The license may contain information such as rights, restrictions. The rights indicates what the device can do, e.g., allowing the device to print, to browse, etc., while the restriction indicates under what kind of condition can a device do, e.g., maximum allowable browsing times. The DRM device must perform an operation associated with the rights and restrictions information in the license.

Usually, to acquire a license from the RI, a device may need to register with the RI first. By registration, the two parties may complete verification and exchange capability information with each other.

Alternatively, the device may also send a request to the RI for joining one or more domains. A domain includes a set of devices. Any device in a domain can purchase a domain license for the domain. The domain license may be distributed freely among the devices in the domain. Usually, the devices in the domain have a same domain key which is used to encapsulate the domain license. Therefore, any device in the domain may use the domain license. When the device does not need such service, the device may send a request to the RI for quitting the domain. In some other system architectures, the domain is not managed by the RI, but by a Domain Authority (DA). The device may send a join request or quit request to the DA.

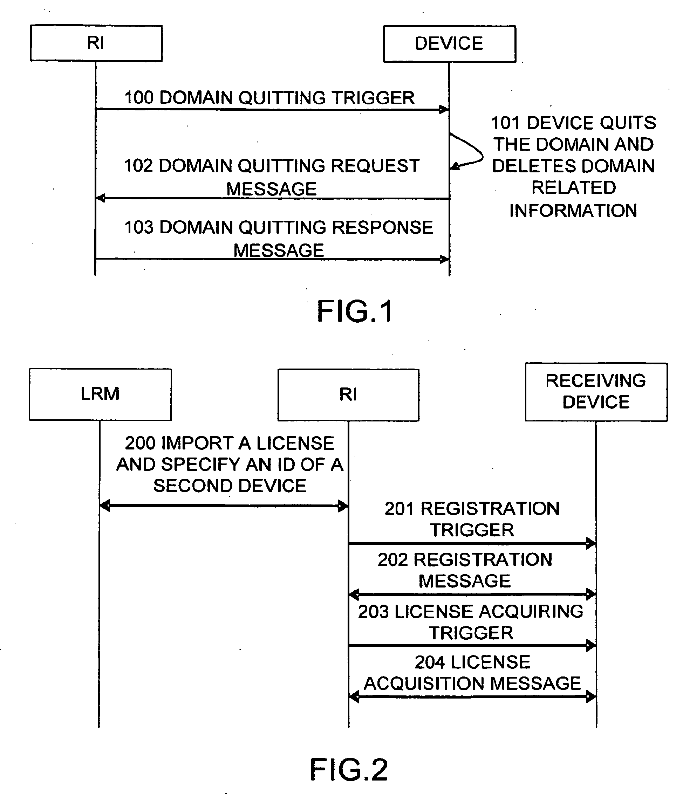

According to a conventional method for triggering a device for interaction, for instance, in OMA DRM standard, the RI may issue a trigger to trigger a device to interact with the RI. Based on different messages triggered subsequently, the trigger may include a registration trigger, a license acquiring trigger, a domain joining trigger, a domain quitting trigger, or a statistic reporting trigger, etc. As illustrated in Figure 1, in one embodiment, the process after the device receives a domain quitting trigger is described as follows.

At step 100, the RI sends a domain quitting trigger to the device.

At step 101, the device deletes domain related information stored locally after the device receives the domain quitting trigger.

At step 102, the device sends a domain quitting request message to the RI, informing the RI that the current device will quit the domain.

At step 103, the RI returns a domain quitting response message to the device, confirming that the RI has deleted the device in the domain.

In the embodiment illustrated in Figure 1, the structure of the domain quitting trigger is described as follows.

```
    <complexType name="RoapTrigger">
     <sequen ce>
        ...... // ellipsis
         <element name="leaveDomain" type="roap:DomainTrigger"/>
         <element name="signature" type="ds:SignatureType" minOccurs="0"h
         <element name="encKey" type="xenc:EncryptedKeyType" minOccurs="0"/>
    </sequence>
    <attribute name="version" type="roap:Version"/>
    <attribute name="proxy" type="boolean"/>
    </complexType>
    <complexType name="DomainTrigger">
      <complexContent>
         <extension base="roap:BasicRoapTrigger">
           <sequence>
              <element riame="domainID" type="roap:DomainIdentifier" minOccurs="0"/>
              <element name="domainAlias" type="string" minOccurs="0"/>
           </sequence>
         </extension>
       </complexContent>
    </complexType>
    <complexType name="BasicRoapTrigger">
       <sequence>
           <element name="riID" type="roap:Identifier"/>
           <element name="riAlias" type="string" minOccurs="0"/>
           <element name="nonce" type="roap:Nonce" minOccurs="0"/>
           <element name="roapURL" type="anyURI"/>
       </sequence>
       <attribute name="id" type="ID"/>
    </complexType>
```

In the implementation of the invention, it is discovered that the above conventional schema encounters at least the following problems.

The element <signature> in the domain quitting trigger contains a signature applied to the element <leaveDomain>. Such signature is regarded as a result of using a message authentication code (mac) key for message authentication (HMAC). The mac key is encapsulated in the element <encKey> by the domain key and delivered to the device. Since any device in the domain has the domain key, a device in the domain which has been controlled by a hacker may intercept a domain quitting trigger issued by the RI to a legal device in the domain and then arbitrarily promulgate the trigger among devices in the domain. As a result, the other legal devices in the domain may be attached. Although the other device is not the original target object to which the trigger should be sent, since the other device fails to identify whether the received trigger is the trigger intended to be sent to the current device, the current device may quit the domain for no reason, which may do harm to the user.

Similarly, for triggers of other types, the device is very likely to result in an incorrect operation and unnecessary loss as the device fails to identify whether the received trigger is the trigger intended to be sent to the current device.

Another conventional method for device interaction, such as introducing a Local Rights Manager (LRM) in a new work group SCE of OMA DRM and importing a non-OMA-DRM license to OMA DRM and designating a receiving device during importing, may allow the receiving device to interact with the RI and obtain the non-OMA-DRM license. As illustrated in Figure 2, the process of LRM importing the license and enabling the receiving device to interact with the RI is described below.

At step 200, the LRM interacts with the RI and imports a license. At the same time, the LRM specifies an ID of a receiving device.

At step 201 through step 202, the RI determines based on the ID of the receiving device whether the receiving device has registered with the RI. If the receiving device has not registered with the RI, the RI triggers the receiving device to register with RI.

At step 203 through step 204, the RI triggers the receiving device to acquire the license.

In the embodiment illustrated in Figure 2, with respect to the OMA DRM definition, the device ID is a public key hash value in the device certificate. The structure of the registration trigger is described as follows.

```
   <complexType name="RoapTrigger">
    <sequen ce>
       ...... // ellipsis
        <element name="registrationRequest" type="roap: BasicRoapTrigger "/>
   </sequence>
   <attribute name="version" type="roap:Version"/>
   <attribute name="proxy" type="boolean"/>
   </complexType>
```

In the implementation of the invention, it is discovered that the above conventional schema encounters at least the following problems.

The receiving device fails to identify whether the received registration trigger is the registration trigger intended to be sent to the current device. Moreover, in the case where the receiving device has multiple certificates, a corresponding receiving device may have multiple device IDs. When the receiving device is registering with the RI, the receiving device may arbitrarily choose an ID to register with the RI, which is very likely that the ID used by the receiving device for registration is inconsistent with the ID provided by the LRM to the RI. If two IDs are inconsistent, the receiving device may not successfully acquire the license imported by the LRM.

Open Mobile Alliance, OMA, "Digital Rights Management, DRM, Specification Version 2.0", 16 July 2004, Sections 5.4., describes ROAP protocol suite messages of Domain management, including their parameters, encodings and semantics are defined.

Open Mobile Alliance, "OMA DRM v2.0 Extensions for Broadcast Support", 25 Apr 2006, Sections 9.2., describes the capability to address multiple devices using a single message provided for improved efficiency of the communication protocols.

### SUMMARY

A method, device and system for triggering a device to perform an operation are provided according to one embodiment of the present disclosure, in which a check is performed on whether the received trigger is the trigger intended to be sent to the current device. Accordingly, the present disclosure is able to prevent a hacker from using the trigger to attach devices.

An embodiment of the invention provides a method for triggering a device to perform an operation according to claim 1.

An embodiment of the invention provides a communication device according to claim 3.

An embodiment of the invention provides a communication system according to claim 4.

In the embodiments of the present disclosure, after the second device receives a trigger containing related information of the target device sent by a first device and determines based on the related information that the current device is the target device to receive the trigger, the second device performs an operation triggered by the trigger. The second device may check if the received trigger is the trigger intended to be sent to the current device and thus prevent the hacker from using the trigger to attack the devices.

### BRIEF DESCRIPTION OF THE DRAWINGS

Figure 1 is a conventional flowchart after the device receives a domain quitting trigger;
Figure 2 is a conventional flowchart of the LRM importing a license and enabling a receiving device to interact with the RI;
Figure 3 is a block diagram of a communication system according to one embodiment of the present disclosure;
Figure 4 illustrates a block diagram of a first device according to one embodiment of the present disclosure.
Figure 5 illustrates a block diagram of a second device according to one embodiment of the present disclosure;
Figure 6 is a flowchart after a second device receives a trigger sent by the RI according to one embodiment of the present disclosure;
Figure 7 illustrates a flowchart of a second device registering with the RI according to one embodiment of the present disclosure; and
Figure 8 illustrates a flowchart after a second device receives a registration trigger according to one embodiment of the present disclosure.

### DETAILED DESCRIPTION

In the embodiments of the present disclosure, after receiving a trigger containing related information of the target device sent by a first device, a second device determines based on the related information whether the second device is the target device and performs the operation triggered by the trigger when the second device determines that the second device is the target device. Accordingly, the second device may check if the received trigger is the trigger intended to be sent to the second device and thus prevent the hacker from using the trigger to attack the devices.

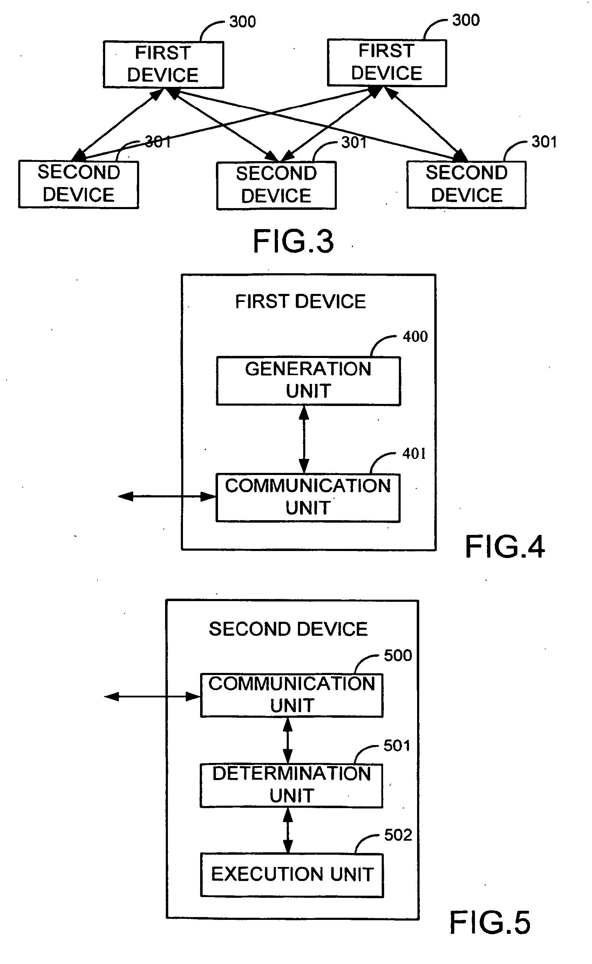

Figure 3 illustrates a structure of a communication system according to one embodiment of the present disclosure. The system includes a first device 300, a second device 301. The first device is configured to provide a trigger containing related information of a target device so that the target device may be triggered to interact with the first device 300. The second device 301 is configured to receive the trigger containing, related information of the target device sent from the first device 300, and perform the operation triggered by the trigger when the second device determines based on the related information that the second device is the target device receiving the trigger.

The first device 300 may be a rights issuer (RI), or other service entity, such as a trigger generating device (e.g., domain authority (DA), Local Rights Manager (LRM)). In addition, the first device 300 may also be an intermediate device forwarding the message. The trigger generating device may send a trigger to the second device via the intermediate device. Figure 4 illustrates a block diagram of the first device according to one embodiment of the present disclosure. The first device includes a generation unit 400, a communication unit 401. The generation unit 400 is configured to generate a trigger containing related information of the target device. The communication unit 401 is configured to send the generated trigger so as to trigger the target device to perform a corresponding operation.

Figure 5 illustrates a block diagram of the second device according to one embodiment of the present disclosure. The second device includes a communication unit 500, a determination unit 501, and an execution unit 502. The communication unit 500 is configured to receive the trigger containing related information of the target device sent by the first device. The determination unit 501 is configured to determine based on the related information whether the second device is the target device to receive the trigger. The execution unit 502 is configured to perform the operation triggered by the trigger when it is determined that the second device is the target device.

The trigger received by the second device may be a trigger triggering various operations. For instance, the trigger may be a registration trigger, a domain joining trigger, a domain quitting trigger, a license acquiring trigger or a statistic reporting trigger, etc. Accordingly, the operations to be performed by the triggered device may be a registration operation, a domain joining operation, a domain quitting operation, a license acquiring operation or a statistic reporting operation. The related information contained in the trigger may be a device ID and/or a device name of the target device or may be other device information which can be used to identify the target device, for instance, device address, etc. The second device may compare one or more of the related information of the target device, i.e., device ID, device name and device address, with the associated information of the second device, and determine based on the comparison result whether the second device is the target device.

An example of a trigger containing a device ID of the target device is illustrated below.

```
    <complexType name="BasicRoapTrigger">
      <sequence>
           <element name="riID" type="roap:Identifier"/>
           <element name="riAlias" type="string" minOccurs="0"h
           <element name="nonce" type="roap:Nonce" minOccurs="0"h
           <element name="roapURL" type="anyURI"/>
           <element name="deviceIDs" type="roap:Identifier" minOccurs="0"
           maxOccurs="unbounded"/>
      </sequence>
      <attribute name="id" type="ID"/>
    </complexType>
```

In the above embodiment, the trigger may contain a device ID of a target device. If the RI needs to trigger a plurality of devices via the trigger for initiating subsequent interactions, the trigger may also contain device IDs of the plurality of target devices. Of course, alternatively, the trigger may not contain the device ID. For instance, when the RI triggers all the devices in the domain to quit the domain, the RI may broadcast a domain quitting trigger which does not contain any specified device ID.

Alternatively, the trigger may also contain a signature applied by the first device to the related information of the target device. For instance, the first device may create a signature to the related information of the target device using a private key of the first device. The second device may verify the signature using a public key of the first device.

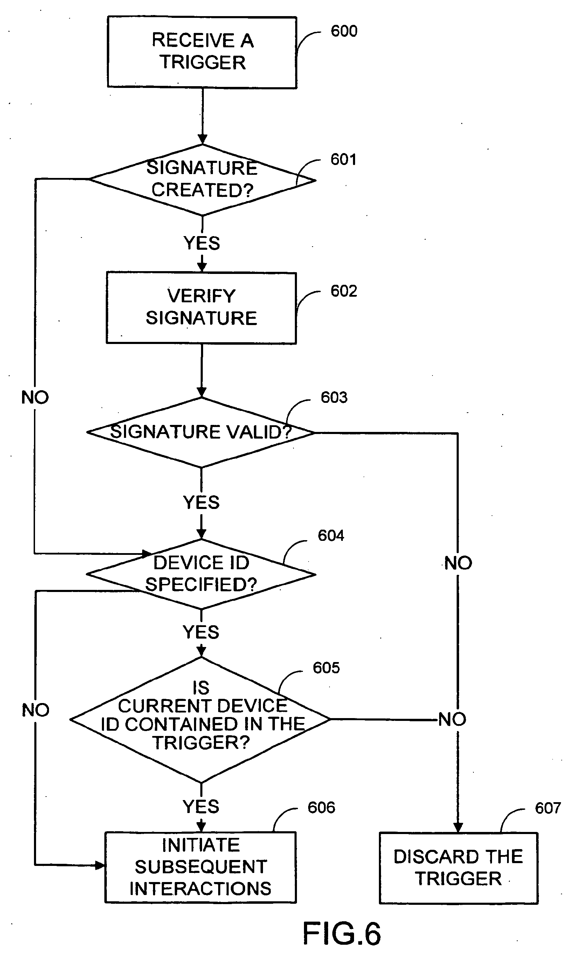

Figure 6 illustrates a flowchart after a second device receives a trigger sent by RI according to one embodiment of the present disclosure. The process includes the following steps.

At step 600, the second device receives a trigger which is sent from RI to the second device.

At step 601, the second device determines whether the received trigger carries signature of the RI. If the received trigger carries signature of the RI, the process proceeds to step 602; otherwise, the process proceeds to step 604.

At step 602, the second device verifies the signature carried by the trigger. The signature is created using a private key of the RI and is the signature to the related information of the target device carried in the trigger. The second device may verify the signature using a public key of the RI.

At step 603, the second device determines the validity of the verification result obtained at step 602. If the verification result is valid, the process proceeds to step 604; otherwise, the process proceeds to step 607.

At step 604, the second device determines whether the trigger specifies a target device ID. If the trigger specifies a target device ID, the process proceeds to step 605; otherwise, the process proceeds to step 606.

At step 605, the second device determines whether the target device ID specified in the trigger is the same as a certain ID of the second device. If the target device ID specified in the trigger is the same as a certain ID of the second device, the process proceeds to step 606; otherwise, the process proceeds to step 607.

At step 606, based on the type of the trigger, the second device performs a corresponding operation, e.g., registration, joining the domain, quitting the domain, reporting the statistic, etc., and then terminates the triggering procedure. The second device may perform the operation triggered by the trigger using the ID of the second device contained in the trigger.

At step 607, the second device discards the trigger and terminates the triggering procedure.

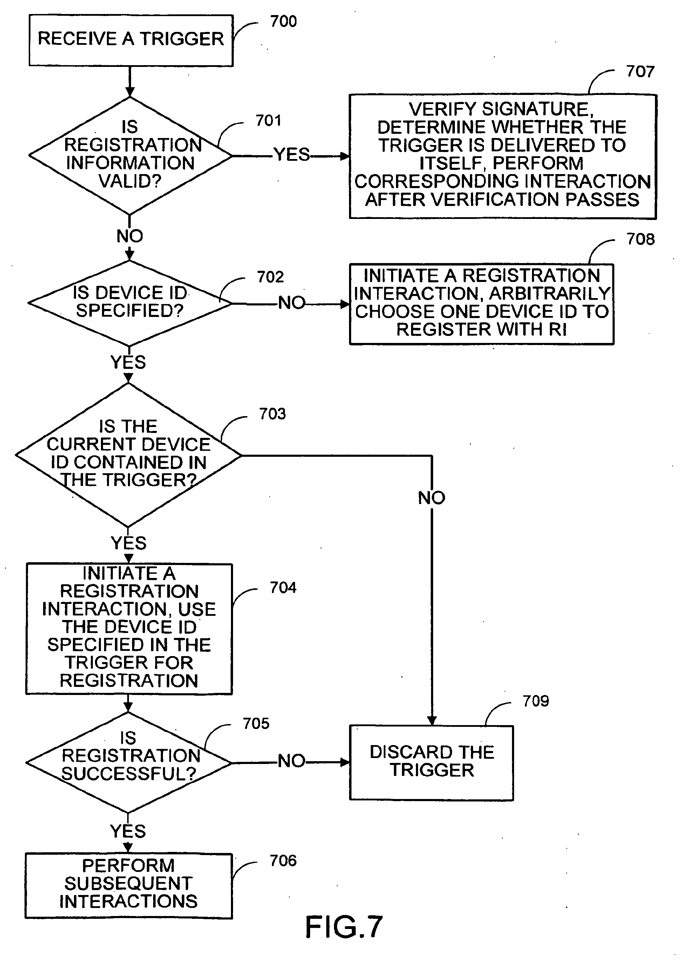

One possible scenario is that, in OMA DRM, when the second device receives triggers of some types, e.g., license acquiring trigger, domain joining trigger, domain quitting trigger, statistic reporting trigger, the second device, however, does not have valid registration information. For example, the registration information contained in the device has been deleted or expired and thus turned invalid, or other device has requested a license for the second device and sent the acquired license acquiring trigger to the second device but the current device has not registered with the RI. In these cases, the second device may first initiate a registration protocol automatically. If the specified target device ID in the trigger received previously by the second device is the same as the ID of the second device, the second device may use the specified current device ID to perform a registration interaction procedure with the RI. Figure 7 illustrates a flowchart of the second device registering with the RI according to one embodiment of the present disclosure. The process includes the following steps.

At step 700, the second device receives a trigger, e.g., a license acquiring trigger, a domain joining trigger, a domain quitting trigger, a statistic reporting trigger, etc.

At step 701, the second device determines whether the second device contains valid registration information. If the second device contains valid registration information, the process proceeds to step 707; otherwise, the process proceeds to step 702.

At step 702, the second device determines whether the received trigger specifies a target device ID. If the received trigger has specified a target device ID, the process proceeds to step 703; otherwise, the process proceeds to step 708.

At step 703, the second device determines whether the ID of the second device is consistent with the target device ID specified in the trigger. If the ID of the second device is consistent with the target device ID specified in the trigger, the process proceeds to step 704; otherwise, the process proceeds to step 709.

At step 704, the second device initiates a registration interaction with the RI. In this case, the second device needs to use an ID of the second device which is consistent with the target device ID specified in the trigger to register with the RI. The second device may incorporate in a registration request message the ID of the second device specified in the trigger.

At step 705, the second device determines whether the registration is successful. If the registration is successful, the process proceeds to step 706; otherwise, the process proceeds to step 709.

At step 706, the second device performs a corresponding subsequent operation based on the type of the trigger previously received and terminates the triggering procedure. Of course, prior to this step, the second device may verify the signature contained in the trigger. If the signature in the trigger is created using a private key of the RI, the second device may verify the signature using a public key of the RI.

At step 707, when the registration information in the second device is valid, the second device may verify the signature contained in the received trigger. If the signature in the trigger is created using a private key of the RI, the second device may verify the signature using a public key of the RI. After the signature verification has been completed, the second device may perform a corresponding subsequent operation based on the type of the trigger received. The details of this step may refer to the procedure in Figure 6.

At step 708, if the trigger received by the second device does not contain a target device ID, the second device may initiate a registration interaction procedure with the RI. If the second device has a plurality of device IDs, the second device may arbitrarily choose one ID to register with the RI.

At step 709, if the ID of the second device is inconsistent with the device ID contained in the trigger or the second device does not register successfully, the second device may discard the trigger and terminate the triggering procedure.

For the registration trigger, when the second device initiates a registration message based on the registration trigger, a device ID specified in the trigger is needed for registration with the RI so as to assure that the second device may later interact with the RI successfully. For instance, in the case where the LRM imports a license and provides the RI with the receiving device ID, the second device is able to successfully acquire the license imported by the LRM only when the device ID used by the second device during registration with the RI is consistent with the device ID provided by the LRM to the RI.

Further, for the registration trigger, since the second device has not registered with the RI at the moment, the second device may probably not know the public key of the RI. In this case, the RI may incorporate its own certificate or certificate link into the trigger for transmission to the second device at the time of creating the signature. However, since the RI may not know a root Certificate Authority (CA) trusted by the device prior to registration, it is not guaranteed that the second device trust the certificate link carried in the trigger. If the certificate is not trusted, the signature verification may not be able to guarantee the security. Therefore, it is possible that the registration triggering message does not carry the signature of the RI.

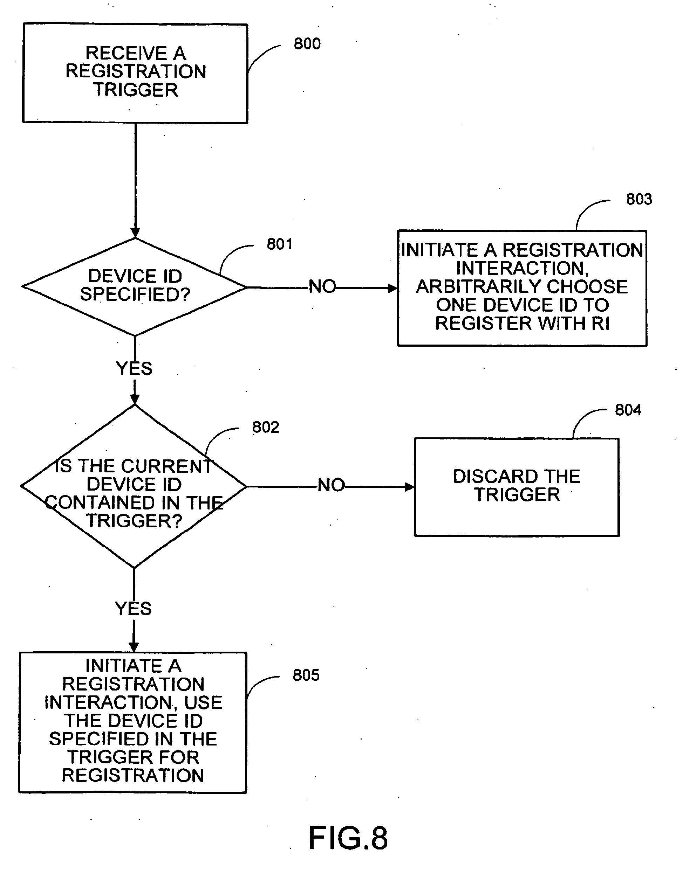

Figure 8 illustrates a flowchart after the second device receives a registration trigger according to one embodiment of the present disclosure. The process includes the following steps.

At step 800, the second device receives a registration trigger.

At step 801, the second device determines whether the trigger specifies a target device ID. If the trigger specifies a target device IDI, the process proceeds to step 802; otherwise, the process proceeds to step 803.

At step 802, the second device determines whether the target device ID specified in the trigger is the same as a certain ID of the second device. If the target device ID specified in the trigger is the same as a certain ID of the second device, the process proceeds to step 805; otherwise, the process proceeds to step 804.

At step 803, the second device may initiate a registration interaction procedure with the RI. If the second device has a plurality of device IDs, the second device may arbitrarily choose one ID to register with the RI.

At step 804, if the ID of the second device is not consistent with the device ID contained in the trigger, the second device may discard the trigger and terminate the triggering procedure.

At step 805, the second device initiates a registration interaction with RI. The second device needs to use an ID of the second device which is specified in the trigger to register with the RI. The second device may incorporate in a registration request message the specified ID of the second device.

In the processes illustrated in Figure 7 and Figure 8, the RI issues a trigger to a device, triggering the device to perform a corresponding operation. Of course, for other service entity, such as DA, LRM, they may also trigger the device to perform a corresponding operation by issuing a trigger, the process of which is similar to those illustrated in Figure 7 and Figure 8. Of course, if the trigger requires a signature, the signature is created by the other service entity issuing the trigger.

It is appreciated by those skilled in the art that the entire or partial steps in the above embodiments can be implemented with hardware when instructed by programs. Such programs may be stored in a computer or in a readable storage media. The storage media may include ROM, RAM, magnetic disc, or optical disc, etc.

In the embodiments of the present disclosure, after the second device receives a trigger containing related information of the target device sent by a first device and determines based on the related information that the current device is the target device for the received trigger, the second device performs a trigger triggering operation. The second device may check if the received trigger is the trigger intended to be sent to the second device and thus prevent the hacker from using the trigger to attack the devices, especially using the domain quitting trigger to attach the devices. Meanwhile, service entity such as RI, DA or LRM may instruct the second device to use a specific device ID to interact with the second device by virtue of the trigger issued.

With the description of the foregoing embodiments, it is readily appreciated by those skilled in the art that the present disclosure may be implemented with software on a necessary hardware platform. Of course, the embodiment may also be implemented with hardware. But, most of the time, the former approach is more preferable. Based on this understanding, technical solutions of the present disclosure, or the part which the present disclosure makes contribution over the prior art may be embodied in a software product. The computer software product may be stored in a readable storage media. The software product may include a set of instructions enabling a terminal device to perform methods according to various embodiments of the present disclosure.

The foregoing disclosure is only a few embodiments of the present disclosure. However, the present disclosure is not intended to be limiting in these respects. Any modification made by those skilled in the art shall be construed as falling within the scope of the present disclosure.

## Claims

1. A method for triggering by a first device a second device to perform an operation, comprising:
receiving (600), by the second device, a trigger sent by the first device, wherein the trigger contains a device ID of a target device, the device ID of the target device is a public key hash value in a device certificate of the target device, and the trigger comprises a domain joining trigger, a domain quitting trigger, a license acquiring trigger, or a statistic reporting trigger; and
performing (606), by the second device, based on the type of the trigger, an operation triggered by the trigger when the second device determines based on the device ID of the target device that the second device is the target device, wherein the operation comprises domain joining, domain quitting, license acquiring, or statistic reporting; and
wherein the trigger further comprises a signature created by the first device to the device ID of the target device using a private key of the first device when the trigger is a domain joining trigger, a domain quitting trigger, a license acquiring trigger, or a statistic reporting trigger, and the method further comprises:
verifying(602), by the second device, the signature using a public key of the first device.

2. The method of claim 1, wherein the first device comprises a rights issuer, a domain authority, a local rights manager or an intermediate device forwarding messages.

3. A communication device, comprising:
a communication unit (500), configured to receive a trigger sent by other device, wherein the trigger contains a device ID of a target device, the device ID of the target device is a public key hash value in a device certificate of the target device, and the trigger comprises a domain joining trigger, a domain quitting trigger, a license acquiring trigger, or a statistic reporting trigger;
an execution unit (502), configured to perform, based on the type of the trigger, an operation triggered by the trigger when it is determined based on the device ID of the target device that the current device is the target device, wherein the operation comprises domain joining, domain quitting, license acquiring, or statistic reporting; and
wherein the trigger further comprises a signature created by the other device to the device ID of the target device using a private key of the first device if the trigger is a domain joining trigger, a domain quitting trigger, a license acquiring trigger, or a statistic reporting trigger, and the current device is adapted to verify the signature using a public key of the first device.

4. A communication system, comprising:
a first device (300), configured to provide a trigger, wherein the trigger contains a device ID of a target device, the device ID of the target device is a public key hash value in a device certificate of the target device, and the trigger comprises a domain joining trigger, a domain quitting trigger, a license acquiring trigger, or a statistic reporting trigger; and
a second device (301), configured to receive the trigger sent from the first device, and perform, based on the type of the trigger, the operation triggered by the trigger when the second device determines based on the device ID of the target device that the second device is the target device, wherein the operation comprises domain joining, domain quitting, license acquiring, or statistic reporting; wherein the trigger further comprises a signature created by the first device to the device ID of the target device using a private key of the first device if the trigger is a domain joining trigger, a domain quitting trigger, a license acquiring trigger, or a statistic reporting trigger, and the second device is adapted to verify the signature using a public key of the first device.

## Patentansprüche

1. Verfahren zum Auslösen, durch eine erste Vorrichtung, einer zweiten Vorrichtung, eine Operation auszuführen, das Folgendes umfasst:
Empfangen (600), durch die zweite Vorrichtung, eines Auslösers, der durch die erste Vorrichtung gesendet wird, wobei der Auslöser eine Vorrichtungs-ID einer Zielvorrichtung enthält, wobei die Vorrichtungs-ID der Zielvorrichtung ein Hash-Wert eines öffentlichen Schlüssels in einem Vorrichtungszertifikat der Zielvorrichtung ist, und der Auslöser einen Domänenzusammenführungsauslöser, einen Domänenbeendigungsauslöser, einen Lizenzerfassungsauslöser oder einen Statistikberichtsauslöser umfasst; und
Ausführen (606), durch die zweite Vorrichtung, basierend auf dem Typ des Auslösers einer Operation, die durch den Auslöser ausgelöst ist, wenn die zweite Vorrichtung basierend auf der Vorrichtungs-ID der Zielvorrichtung bestimmt, dass die zweite Vorrichtung die Zielvorrichtung ist, wobei die Operation Domänenzusammenführung, Domänenbeendigung, Lizenzerfassung oder Statistikberichten umfasst; und
wobei der Auslöser ferner eine Signatur umfasst, die durch die erste Vorrichtung für die Vorrichtungs-ID der Zielvorrichtung unter Verwendung eines privaten Schlüssels der ersten Vorrichtung erzeugt wird, wenn der Auslöser ein Domänenzusammenführungsauslöser, ein Domänenbeendigungsauslöser, ein Lizenzerfassungsauslöser oder ein Statistikberichtsauslöser ist, und wobei das Verfahren ferner Folgendes umfasst:
Verifizieren (602), durch die zweite Vorrichtung, der Signatur unter Verwendung eines öffentlichen Schlüssels der ersten Vorrichtung.

2. Verfahren nach Anspruch 1, wobei die erste Vorrichtung eine Rechtevergabeeinheit, eine Domäneninstanz, einen Manager für lokale Rechte oder eine Zwischenvorrichtung, die Nachrichten weiterleitet, umfasst.

3. Kommunikationsvorrichtung, die Folgendes umfasst:
eine Kommunikationseinheit (500), die konfiguriert ist, einen Auslöser, der durch eine andere Vorrichtung gesendet wird, zu empfangen, wobei der Auslöser eine Vorrichtungs-ID einer Zielvorrichtung enthält, wobei die Vorrichtungs-ID der Zielvorrichtung ein Hash-Wert eines öffentlichen Schlüssels in einem Vorrichtungszertifikat der Zielvorrichtung ist, und der Auslöser einen Domänenzusammenführungsauslöser, einen Domänenbeendigungsauslöser, einen Lizenzerfassungsauslöser oder einen Statistikberichtsauslöser umfasst;
eine Ausführungseinheit (502), die konfiguriert ist, basierend auf dem Typ des Auslösers eine Operation, die durch den Auslöser ausgelöst ist, auszuführen, wenn basierend auf der Vorrichtungs-ID der Zielvorrichtung bestimmt wird, dass die aktuelle Vorrichtung die Zielvorrichtung ist, wobei die Operation Domänenzusammenführung, Domänenbeendigung, Lizenzerfassung oder Statistikberichten umfasst; und
wobei der Auslöser ferner eine Signatur umfasst, die durch die andere Vorrichtung für die Vorrichtungs-ID der Zielvorrichtung unter Verwendung eines privaten Schlüssels der ersten Vorrichtung erzeugt wird, falls der Auslöser ein Domänenzusammenführungsauslöser, ein Domänenbeendigungsauslöser, ein Lizenzerfassungsauslöser oder ein Statistikberichtsauslöser ist, und die aktuelle Vorrichtung ausgelegt ist, die Signatur unter Verwendung eines öffentlichen Schlüssels der ersten Vorrichtung zu verifizieren.

4. Kommunikationssystem, das Folgendes umfasst:
eine erste Vorrichtung (300), die konfiguriert ist, einen Auslöser bereitzustellen, wobei der Auslöser eine Vorrichtungs-ID einer Zielvorrichtung enthält, wobei die Vorrichtungs-ID der Zielvorrichtung ein Hash-Wert eines öffentlichen Schlüssels in einem Vorrichtungszertifikat der Zielvorrichtung ist, und der Auslöser einen Domänenzusammenführungsauslöser, einen Domänenbeendigungsauslöser, einen Lizenzerfassungsauslöser oder einen Statistikberichtsauslöser umfasst; und
eine zweite Vorrichtung (301), die konfiguriert ist, den von der ersten Vorrichtung gesendeten Auslöser zu empfangen und basierend auf dem Typ des Auslösers die Operation auszuführen, die durch den Auslöser ausgelöst ist, wenn die zweite Vorrichtung basierend auf der Vorrichtungs-ID der Zielvorrichtung bestimmt, dass die zweite Vorrichtung die Zielvorrichtung ist, wobei die Operation Domänenzusammenführung, Domänenbeendigung, Lizenzerfassung oder Statistikberichten umfasst; wobei der Auslöser ferner eine Signatur umfasst, die durch die erste Vorrichtung für die Vorrichtungs-ID der Zielvorrichtung unter Verwendung eines privaten Schlüssels der ersten Vorrichtung erzeugt wird, falls der Auslöser ein Domänenzusammenführungsauslöser, ein Domänenbeendigungsauslöser, ein Lizenzerfassungsauslöser oder ein Statistikberichtsauslöser ist, und die zweite Vorrichtung ausgelegt ist, die Signatur unter Verwendung eines öffentlichen Schlüssels der ersten Vorrichtung zu verifizieren.

## Revendications

1. Procédé pour déclencher, par un premier dispositif, l'exécution d'une opération par un deuxième dispositif, le procédé comprenant les étapes consistant à :
recevoir (600), par le deuxième dispositif, un déclencheur envoyé par le premier dispositif, le déclencheur contenant une identification de dispositif d'un dispositif cible, l'identification de dispositif du dispositif cible prenant la forme d'une valeur de hachage de clé publique dans un certificat de dispositif du dispositif cible, et le déclencheur comprenant un déclencheur d'affiliation à un domaine, un déclencheur d'abandon d'un domaine, un déclencheur d'acquisition d'une licence ou un déclencheur de notification statistique ; et
exécuter (606), par le deuxième dispositif, en fonction du type du déclencheur, une opération déclenchée par le déclencheur si le deuxième dispositif établit, en fonction de l'identification de dispositif du dispositif cible, que le deuxième dispositif est le dispositif cible, l'opération comprenant une affiliation à un domaine, un abandon d'un domaine, une acquisition d'une licence ou une notification statistique ; et
dans lequel le déclencheur comprend en outre une signature créée par le premier dispositif associée à l'identification de dispositif du dispositif cible à l'aide d'une clé privée du premier dispositif si le déclencheur est un déclencheur d'affiliation à un domaine, un déclencheur d'abandon d'un domaine, un déclencheur d'acquisition d'une licence ou un déclencheur de notification statistique, et lequel procédé comprend en outre l'étape consistant à :
vérifier (602), par le deuxième dispositif, la signature à l'aide d'une clé publique du premier dispositif.

2. Procédé selon la revendication 1, dans lequel le premier dispositif comprend un émetteur de droits, une autorité de domaine, un gestionnaire de droits local ou un dispositif intermédiaire réacheminant des messages.

3. Dispositif de communication, comprenant :
une unité de communication (500), configurée pour recevoir un déclencheur envoyé par un autre dispositif, le déclencheur contenant une identification de dispositif d'un dispositif cible, l'identification de dispositif du dispositif cible prenant la forme d'une valeur de hachage de clé publique dans un certificat de dispositif du dispositif cible, et le déclencheur comprenant un déclencheur d'affiliation à un domaine, un déclencheur d'abandon d'un domaine, un déclencheur d'acquisition d'une licence ou un déclencheur de notification statistique ;
une unité d'exécution (502), configurée pour exécuter (606), en fonction du type du déclencheur, une opération déclenchée par le déclencheur s'il est établi, en fonction de l'identification de dispositif du dispositif cible, que le dispositif en question est le dispositif cible, l'opération comprenant une affiliation à un domaine, un abandon d'un domaine, une acquisition d'une licence ou une notification statistique ; et
dans lequel le déclencheur comprend en outre une signature créée par l'autre dispositif associée à l'identification de dispositif du dispositif cible à l'aide d'une clé privée du premier dispositif si le déclencheur est un déclencheur d'affiliation à un domaine, un déclencheur d'abandon d'un domaine, un déclencheur d'acquisition d'une licence ou un déclencheur de notification statistique, et lequel dispositif en question est adapté à vérifier la signature à l'aide d'une clé publique du premier dispositif.

4. Système de communication, comprenant :
un premier dispositif (300), configuré pour fournir un déclencheur, le déclencheur contenant une identification de dispositif d'un dispositif cible, l'identification de dispositif du dispositif cible prenant la forme d'une valeur de hachage de clé publique dans un certificat de dispositif du dispositif cible, et le déclencheur comprenant un déclencheur d'affiliation à un domaine, un déclencheur d'abandon d'un domaine, un déclencheur d'acquisition d'une licence ou un déclencheur de notification statistique ; et
un deuxième dispositif (301), configuré pour recevoir le déclencheur envoyé par le premier dispositif, et exécuter, en fonction du type du déclencheur, une opération déclenchée par le déclencheur si le deuxième dispositif établit, en fonction de l'identification de dispositif du dispositif cible, que le deuxième dispositif est le dispositif cible, l'opération comprenant une affiliation à un domaine, un abandon d'un domaine, une acquisition d'une licence ou une notification statistique ; dans lequel le déclencheur comprend en outre une signature créée par le premier dispositif associée à l'identification de dispositif du dispositif cible à l'aide d'une clé privée du premier dispositif si le déclencheur est un déclencheur d'affiliation à un domaine, un déclencheur d'abandon d'un domaine, un déclencheur d'acquisition d'une licence ou un déclencheur de notification statistique, et le deuxième dispositif est adapté à vérifier la signature à l'aide d'une clé publique du premier dispositif.
